# EUROPÄISCHE PATENTANMELDUNG

(11) **EP 1 233 045 A2**
(43) Veröffentlichungstag der Anmeldung: **21.08.2002**
(21) Anmeldenummer: 02001136.7
(22) Anmeldetag: 25.01.2002
(51) Int. Cl.: C09J 4/00, C08J 5/10

(54) **Haftmittel zur Erhöhung der Haftfestigkeit zwischen Kautschuken und Festigkeitsträgern**

(30) Priorität: 07.02.2001 DE 10105402
(71) Anmelder: Bayer Aktiengesellschaft, 51368 Leverkusen (DE)
(72) Erfinder: Jansen, Bernhard, Dr., 51061 Köln (DE); Schubart, Rüdiger, Dr., 51467 Bergisch Gladbach (DE); Grabowski, Stefan, Dr., 41539 Dormagen (DE); Weidenhaupt, Hermann-Josef, Dr., 50259 Pulheim (DE)

(57) **Zusammenfassung**

Die vorliegende Erfindung betrifft Haftmittel zur Erhöhung der Haftfestigkeit zwischen Kautschuken und Festigkeitsträgern auf Basis von Metallen, organischen Polymeren oder keramischen Materialien sowie die Verwendung der Haftmittel zur Herstellung von Festigkeitsträgern enthaltenden Kautschukmischungen oder Kautschukvulkanisaten.

Die erfindungsgemäßen Haftmittel zeichnen sich durch eine einfache und umweltfreundliche Verarbeitung aus verbunden mit einer sehr guten Haftwirkung.

## Beschreibung

Gegenstand der vorliegenden Erfindung sind Haftmittel zur Erhöhung der Haftfestigkeit zwischen Kautschuken und Festigkeitsträgem auf Basis von Metallen, organischen Polymeren oder keramischen Materialien sowie die Verwendung der Haftmittel zur Herstellung von Festigkeitsträgem enthaltenden Kautschukmischungen oder Kautschukvulkanisaten.

Viele technische Gummiartikel, beispielsweise Luftreifen, Förderbänder, Treibriemen, gummierte Gewebe oder Hochdruckschläuche sind mit verstärkenden Einlagen ausgestattet, hier Festigkeitsträger genannt, die metallische Materialien, organischpolymere Materialien oder keramische Materialien umfassen, bevorzugt in Form von Filamenten, Fasern, Drähten, Schnüren, Bändern oder auch Kombinationen derselben.

Um eine gute Leistungsfähigkeit und Lebensdauer der genannten Gummiartikel zu gewährleisten, ist eine starke und dauerhafte Bindung zwischen den Festigkeitsträgern und dem Kautschuk bzw. Gummi erforderlich.

Diese lässt sich z.B. im Fall des Einsatzes von Stahlcord als Festigkeitsträger ohne ein weiteres Klebemittel nur erzielen, wenn die Filamente des Stahlcordes mit einer dünnen Schicht aus d-Messing oder einer anderen Legierung mit den Hauptbestandteilen Kupfer und Zink oder mit reinem Zink plattiert sind.

Der so ausgerüstete Stahlcord wird direkt in die in der Regel besonders haftungsfördernde Kautschukmischungszusätze enthaltende Gummimischung einvulkanisiert. Im Falle textiler Festigkeitsträger werden üblicherweise in geeigneter Form oberflächenbehandelte Fasern eingesetzt.

Die gebräuchlichsten Zusätze zur Verbesserung der Bindekraft, im folgenden als Haftmittel bezeichnet, lassen sich nach ihrem chemischen Aufbau in zwei Gruppen einteilen.

Die erste Gruppe umfasst alle Haftmittel, die nur als Mehrkomponentensysteme wirksam sind. Ihnen ist gemeinsam, dass sie hochaktive Kieselsäuren enthalten.

Die weiteren Komponenten sind Resorcin oder Resorcin-Formaldehydkondensationsprodukte und Formaldehyd-abspaltende Verbindungen, wie Hexamethylentetramin, veretherte oder veresterte Methylolmelamine mit verschiedenen Veretherungsgraden bzw. Veresterungsgraden und deren Kondensationsprodukte.

Diese Systeme liefern zwar gute Haftwerte, verursachen jedoch manchmal während der Vulkanisation Dämpfe und Geruchsbelästigung. Ferner wird in erheblichem Maße die Verarbeitbarkeit in den Mischmaschinen, z.B. auf dem Walzenmischer, beeinträchtigt, da das Resorcin, besonders bei Temperaturen in der Nähe des Schmelzpunktes, zur Sublimation neigt.

Zur zweiten Gruppe sind vor allem metallorganische Verbindungen zu zählen, wobei die Verbindungen des Cobalts überwiegen. Vor allem Cobaltseifen, wie sie in der Lackindustrie auch als Sikkative gebräuchlich sind, werden seit längerer Zeit verwendet.

So werden in der FR-A 1 323 934 verschiedene Cobaltsalze, z.B. Cobaltstearat, Cobaltlinolat oder Cobaltnaphthenat beansprucht. Auch boroganische Cobaltverbindungen, entsprechend der US-A 3 296 242, sind geeignet. Neben Cobalt kommen als Metalle auch Kupfer, Nickel, Blei oder Zink in Betracht (Vgl. DE-A 2 303 674, DE-A 2 447 853 oder US-A 4 154 911).

Weitere Verbindungsklassen sind Nickel- und Cobaltkomplexe von Succinylbernsteinsäureestern (EP-A 0 003 820) oder Übergangsmetallsalze bestimmter 1,2-Diole (EP-A 0 009 000).

Einfache organische Salze verbessern die Haftung einer Kautschukmasse an metallischen Trägermaterialien im allgemeinen nicht, sondern setzen im Gegenteil als Kautschukgifte die Stabilität des Gummi-Metall-Verbundes oft herab.

Auch die gesundheitsschädliche Wirkung der bisher verwendeten Haftmittel ist erwähnenswert. So neigen Resorcin und Resorcinpolykondensate durch die Sublimation des Resorcins zur Bildung gesundheitsschädlicher Dämpfe während der Verarbeitung. Cobalt und bioverfügbare Cobaltverbindungen sind außerdem krebserzeugend.

Aufgabe der Erfindung ist es daher, ein Haftsystem für eine verbesserte Kautschukhaftung an den Festigkeitsträgern bereitzustellen, welches obige Nachteile nicht bzw. nicht in bisherigem Maße aufweist und das insbesondere auch keine Schwermetalle wie Cobalt oder Nickel enthält.

Die Erfindung betrifft daher Haftmittel zur Erhöhung der Haftfestigkeit zwischen Kautschuken und Festigkeitsträgern, die dadurch gekennzeichnet sind, dass sie aus Verbindungen bestehen, die a) durch Umsetzung von Carbonsäuren mit Verbindungen, die eine oder mehrere Hydroxylgruppen oder eine oder mehrere Aminogruppen oder eine oder mehrere Hydroxyl- und eine oder mehrere Aminogruppen und zusätzlich eine oder mehrere Kohlenstoff-Kohlenstoff-Doppel- oder Dreifachbindungen im Molekül aufweisen sowie gegebenenfalls mit Verbindungen, die eine oder mehrere Hydroxylgruppen oder eine oder mehrere primäre oder sekundäre Aminogruppen oder eine oder mehrere Hydroxyl- und eine oder mehrere primäre oder sekundäre Aminogruppen und zusätzlich mindestens eine tertiäre Aminogruppe im Molekül enthalten, oder b) durch Umsetzung von Polyisocyanaten mit Verbindungen, die eine oder mehrere Hydroxylgruppen oder eine oder mehrere Aminogruppen oder eine oder mehrere Hydroxyl- und eine oder mehrere Aminogruppen und zusätzlich eine oder mehrere Kohlenstoff-Kohlenstoff-Doppel- oder Dreifachbindungen im Molekül aufweisen sowie gegebenenfalls mit Verbindungen, die eine oder mehrere Hydroxylgruppen oder eine oder mehrere primäre oder sekundäre Aminogruppen oder eine oder mehrere Hydroxyl- und eine oder mehrere primäre oder sekundäre Aminogruppen und zusätzlich mindestens eine tertiäre Aminogruppe im Molekül enthalten, erhältlich sind.

Als Carbonsäuren kommen praktisch alle bekannten Carbonsäuren in Betracht, insbesondere solche die mindestens zwei Carboxylgruppen, bevorzugt 2 bis 4 Carboxylgruppen, im Molekül enthalten und 2 bis 40 Kohlenstoffatome, bevorzugt 4 bis 36 Kohlenstoffatome, im Molekül besitzen.

Die erfindungsgemäß einsetzbaren Carbonsäuren können selbstverständlich durch die verschiedensten Gruppen substituiert sein, wie Hydroxylgruppen, Halogene, Nitrogruppen, Alkylgruppen oder Arylgruppen.

Die Substituenten können ein- oder mehrfach in den genannten Carbonsäuren vorhanden sein. Weiterhin ist es möglich, solche Carbonsäuren einzusetzen, die durch Heteroatome, wie Sauerstoff, Schwefel oder Stickstoff sowie ungesättigte Strukturen, wie Doppelbindungen, ein- oder mehrfach unterbrochen sind.

Als Carbonsäuren sind bevorzugt zu nennen: Maleinsäure, Fumarsäure, Itaconsäure, Oxalsäure, Malonsäure, Bernsteinsäure, Glutarsäure,Adipinsäure, Korksäure, Azelainsäure, Sebacinsäure, Dodecandisäure, Äpfelsäure, Weinsäure, Butantetracarbonsäure, Diglykolsäure, Thiodiglykolsäure, Zitronensäure, Schleimsäure, Camphersäure, Hexahydroterephthalsäure, HET-Säure, Phthalsäure, Isophthalsäure, Terephthalsäure, Tetrachlorphthalsäure, 4-Chlor-1,3-benzoldicarbonsäure, 1,3,5-Benzoltetracarbonsäure, Pyromellithsäure, 4-Phenylphthalsäure, 1,4,5,8-Naphthalintetracarbonsäure sowie Dimerfettsäure, wie in der Monographie: "The DIMER ACIDS", Hrsg. Erward C. Leonhard, Humko Sheffield Chemical, beschrieben, insbesondere Maleinsäure, Fumarsäure, Itaconsäure, Malonsäure, Bemsteinsäure, Adipinsäure, Phthalsäure, Isophthalsäure sowie die in der Monographie beschriebenen Dimerfettsäuren.

Ganz besonders bevorzugt werden eingesetzt Maleinsäure, Fumarsäure, Malonsäure, Adipinsäure und Dimerfettsäuren.

Selbstverständlich ist es möglich, Gemische der oben genannten Carbonsäure einzusetzen.

Als Verbindungen, die eine oder mehrere Hydroxylgruppen oder eine oder mehrere Aminogruppen oder eine oder mehrere Hydroxyl- und eine oder mehrere Aminogruppen und zusätzlich eine oder mehrere Kohlenstoff-Kohlenstoff-Doppel- oder Dreifachbindung im Molekül aufweisen, sind zu nennen: Allylalkohol, 2-Methyl-3-buten-2-ol, Oleinalkohol, Propargylalkohol, 3-Butin-2-ol, 2-Methyl-3-butin-2-ol, Allylamin sowie Diallylamin, bevorzugt Allylalkohol, Oleinalkohol und Propargylalkohol.

Für die Umsetzung mit den nachstehend erwähnten Polyisocyanaten werden besonders bevorzugt eingesetzt Allylalkohol, Oleinalkohol, Allylamin und Diallylamin.

Die eben genannten Amino- und Hydroxyverbindungen können sowohl einzeln als auch im Gemisch untereinander eingesetzt werden.

Als Verbindungen die zusätzlich zu den zuvor genannten Hydroxylgruppen oder Aminogruppen enthaltenden Verbindungen eingesetzt werden können, kommen wie erwähnt solche in Betracht, die eine oder mehrere Hydroxylgruppen, oder eine oder mehrere primäre oder sekundäre Aminogruppen oder eine oder mehrere Hydroxylund eine oder mehrere primäre oder sekundäre Aminogruppen und zusätzlich mindestens eine tertiäre Aminogruppe im Molekül enthalten, wobei beispielhaft zu nennen sind: N,N- Dimethyl- sowie N,N-Diethylethanolamin, 2-(2- Dimethyl-aminoethoxy)-ethanol, 2-(2-Diethyl-aminoethoxy)-ethanol, N,N-Dibutylaminoethanol, N-Methyldiethanolamin, N- Butyldiethanolamin, Bis-(2- hydroxyethyl) ―oleylamin, Triethanolamin, (3- Hydroxypropyl)- dimethylamin, (2-Hydroxypropyl)-dimethylamin, 1-Diethylamino-2-propanol, Bis-(2-hydroxypropyl)-methylamin, Tris-(2-hydroxypropyl)-amin, N,N-Diethyl-1,2-ethanamin, N,N',N"-Trimethyldiethylentriamin, N,N-Dimethyl-1,3-propandiamin, N,N-Diethyl-1,3-propandiamin, Bis-(3-aminopropyl)-methylamin.

Bevorzugt sind N,N-Dimethyl- und N,N-Diethylethanolamin, N,N-Dibutylaminoethanol, 2-(2-Dimethyl-aminoethoxy)-ethanol. Diese Verbindungen können sowohl einzeln als auch im Gemisch untereinander eingesetzt werden.

Als Polyisocyanate können die bekannten modifizierten oder nicht modifizierten aliphatischen, cycloaliphatischen, araliphatische oder aromatische Polyisocyanate eingesetzt werden, sowohl einzeln als auch im Gemisch untereinander. Bevorzugt werden aliphatische, cycloaliphatische, araliphatische und/oder aromatische Polyisocyanate eingesetzt, welche Uretdion- und/oder Isocyanurat- und/oder Allophanatund/oder Biuret- und/oder Oxadiazinstrukturen aufweisen und die in bekannter Weise aus den genannten Polyisocyanaten hergestellt werden können. Als aliphatische oder cycloaliphatische Diisocyanate kommen beispielsweise in Betracht: 1,4-Diisocyanatobutan, 1,6-Diisocyanatohexan, 1,5-Diisocyanato-2,2-dimethyl-pentan, 2,2,4- bzw. 2,4,4-Trimethyl-1,6-diisocyanatohexan, 1,3- und 1,4-Diisocyanatocyclohexan, 1-Isocyanato-3,3,5-trimethyl-5-isocyanato-methyl-cyclohexan, 1-Isocyanato-1-methyl-4-isocyanatomethyl-cyclohexan, 4,4-Diisocyanato-dicyclohexylmethan oder beliebige Gemische der zuvor genannten Diisocyanate geeignet. Bevorzugt sind: 1,6-Diisocyanatohexan, 1,4-Diisocyanatocyclohexan und 1-Isocyanato-3,3,5-trimethyl-5, Isocyanato-methyl-cyclohexan.

Als aromatische Polyisocyanate kommen beispielsweise Toluylendiisocyanat sowie seine Isomerengemische, 1,5-Diisocyanatonaphthalin und Diphenylmethandiisocyanate in Betracht.

Wie zuvor erwähnt können die namentlich genannten Polyisocyanate mit den zuvor genannten Strukturen modifiziert sein.

Bevorzugt werden solche Polyisocyanate eingesetzt, die durch Uretdion- und/oder Isocyanurat Strukturen und/oder Allophanat- und/oder Biuretstrukturen modifiziert sind.

Zur Herstellung der erfindungsgemäßen Haftmittel werden die genannten Carbonsäuren - einzeln oder im Gemisch untereinander - mit den genannten Hydroxylund/oder Aminogruppen enthaltenden ungesättigten Verbindungen dergestalt umgesetzt, dass auf 1 mol Carboxylgruppen 0,1 bis 1,0 mol der Hydroxyl- und/oder Aminogruppen enthaltenden ungesättigten Verbindungen sowie 0,1 bis 0,9 mol der tert.-Aminogruppen enthaltenden Verbindungen kommen. Bevorzugt werden auf 1 mol Carboxylgruppen, 0,3 bis 1,0 mol der ungesättigten Hydroxyl- und/oder Aminogruppen enthaltenden Verbindungen sowie 0,3 bis 0,7 mol der tert.-Aminogruppen enthaltenden Verbindungen eingesetzt.

Zur Herstellung der erfindungsgemäßen Haftmittel auf Basis von Polyisocyanaten werden die zuvor genannten Polyisocyanate so mit den Hydroxyl- und /oder Aminogruppen enthaltenden ungesättigten Verbindungen umgesetzt, dass auf 1 mol Isocyanatgruppen 0,1 bis 1 mol der Hydroxyl- und/oder Aminogruppen enthaltenden ungesättigten Verbindungen sowie 0,3 bis 0,7 mol der tert.-Aminogruppen enthaltenden Verbindungen entfallen.

Bevorzugt werden auf 1 mol Isocyanatgruppen 0,3 bis 1 mol der ungesättigten Hydroxyl- und/oder Aminogruppen enthaltenden Verbindungen sowie 0,3 bis 0,7 mol der tert.-Aminogruppen enthaltenden Verbindungen eingesetzt.

Die Herstellung der erfindungsgemäßen Haftmittel aus den oben genannten Komponenten ist bekannt und kann beispielsweise bei dem Einsatz von Carbonsäuren nach dem Schmelzesterverfahren in lösungsmittelfreier Arbeitsweise oder in Form einer azeotropen, einer extraktiven Veresterung unter Verwendung von wasserentziehenden Mitteln durchgeführt werden. Die Veresterungsreaktionen sind beispielsweise im Organikum, 14. Auflage, VEB Deutscher Verlag der Wissenschaften, Berlin, 1965, Seite 440 bis 443 beschrieben. Selbstverständlich ist auch eine Arbeitsweise zur Veresterung möglich, die von den Anhydriden der genannten Carbonsäuren ausgeht.

Die Umsetzung der genannten Polyisocyanate mit den Hydroxyl- oder Aminogruppen haltigen Verbindungen ist ebenfalls Stand der Technik und beispielsweise beschrieben in Houben-Weyl, Methoden der Organischen Chemie, Makromolekulare Stoffe, Band E 20, Teil 2, S. 1587-1609.

Ein weiterer Gegenstand der vorliegenden Erfindung ist die Verwendung der erfindungsgemäßen Haftmittel zur Herstellung von Festigkeitsträgern enthaltenden Kautschukmischungen oder Kautschukvulkanisaten, die in den verschiedensten Formen vorliegen können.

Als Festigkeitsträger kommen dabei die bekannten Festigkeitsträger in Betracht, wie sie zur Herstellung von entsprechenden Gummiartikeln verwendet werden. Zu nennen sind beispielsweise Stahlcord, Stahlcord in verzinkter oder vermessingter Form, Textilfasern, wie Cellulosefasern, Viskosefasern, Polyesterfasern, Polyamidfasern, Aramidfasern sowie Polyethylenfasem, Carbonfasem oder Glasfasern sowie Fasern auf Basis von keramischen Werkstoffen. Die Festigkeitskörper können gegebenenfalls nach den gängigen Verfahren oberflächenmodifiziert sein.

Als Kautschuke, die zur Herstellung der Festigkeitsträger enthaltenden Kautschukmischungen oder Kautschukvulkanisate eingesetzt werden können, kommen sowohl Naturkautschuk als auch die üblichen Synthesekautschuke in Betracht. Zu nennen sind beispielsweise Kautschuke auf Basis von Butadien, Butadien/Acrylsäure-C₁-C₄-alkylestern, Chloropren, Isopren oder Isopren-Copolymeren, Styrol/Butadien-Copolymerisaten, Styrol/Butadien/Acrylnitril-Copolymerisaten, Isobutylen/Isopren-Copolymerisaten, Butadien/Acrylnitril-Copolymerisaten, teilhydrierter oder vollständig hydrierte Butadien/Acrylnitril-Copolymerisaten, Ethylen/Propylen/ Dien-Copolymerisaten.

Selbstverständlich können die genannten Kautschuke allein als auch in Mischungen untereinander eingesetzt werden. Das günstigste Mischungsverhältnis der einzusetzenden Kautschuke bestimmt sich nach dem späteren Verwendungszweck der Kautschukmischungen oder Kautschukvulkanisate.

Bevorzugt werden eingesetzt Naturkautschuk sowie Kautschuke auf Basis von Butadien und Styrol/Butadien-Copolymerisaten.

Die erfindungsgemäßen Haftmittel werden zur Herstellung von Kautschukmischungen oder Kautschukmischungen üblicherweise in Mengen von 0,01 bis 20 Gew.-Teilen, bevorzugt in Mengen von 0,05 bis 5 Gew.-Teilen, ganz besonders bevorzugt in Mengen von 0,1 bis 1,5 Gew.-Teilen, bezogen auf 100 Gew.-Teile Kautschuk (= phr) eingesetzt.

Selbstverständlich ist es möglich, die erfindungsgemäßen Haftmittel, mit den in der Praxis bisher verwendeten Haftmittelsystemen zu kombinieren.

Zur Herstellung der Festigkeitsträger enthaltende Kautschukmischungen oder Kautschukvulkanisate unter Verwendung der erfindungsgemäßen Haftmittel können den Kautschukmischungen noch die bekannten Kautschukhilfsmittel und Vernetzer bzw. Vemetzersysteme zugemischt werden; in den dafür bekannten Mengen.

Solche Kautschukhilfsmittel und Vernetzer bzw. Vernetzersysteme sind beispielsweise näher beschrieben in Ullmann's Encyclopedia of Industrial Chemistry, Fifth completely revised Edn., Vol. A 23, S. 365 bis 420.

Die Vulkanisation der erfindungsgemäßen Haftmittel und Festigkeitsträger enthaltenden Kautschukmischungen erfolgt in üblicher Weise bei Temperaturen im Bereich von 100 bis 200°C, bevorzugt bei 130 bis 180°C, gegebenenfalls unter Druck von 10 bis 200 bar.

Mit den erfindungsgemäßen Haftmitteln können Festigkeitsträger enthaltende Gummiartikel aller Art hergestellt werden, beispielsweise Fördergurte, Riemen, Schläuche, Reifenbauteile oder gummierte Gewebe.

### Beispiele

Bei den Kautschukpolymeren und Chemikalien handelt es sich um Handelsprodukte der Bayer AG, Geschäftsbereich Kautschuk, wenn nicht anders angegeben. Die gummimechanischen Prüfungen wurden nach DIN 53523, 53504, 53505, 53512, 53513 und ASTM D 2084 durchgeführt.

Die Prüfung der Haftung erfolgt analog ASTM D 2229.

### Beispiel 1: Herstellung der Haftmittel des Typs a) bzw. b)

### Haftmittel a):

Maleinsäurediallylester, erhältlich von der Fa. Fluka unter Artikel-No. 63230.

### Haftmittel b):

100 Gew.- Teile eines Isocyanates mit dem NCO- Gehalt von 22,5 %, bestehend im wesentlichen aus trimerem Hexamethylendiisocyanat, wurden bei Raumtemperatur mit 29,7 Gew.- Teilen Allylalkohol verrührt. Dann wird das Reaktionsgemisch auf 60°C aufgeheizt und so lange gerührt, bis sich im Infrarotsprektrum keine Isocyanatbande mehr zeigt. Das entstehende Produkt ist eine hochviskose honiggelbe Substanz.

### Beispiel 2: Herstellung von Haftmischungen

In einem 1,5 l Innenmischer der Fa. Werner & Pfleiderer (Modell GK 1.5 E) wurden die Bestandteile Polymer, Füllstoffe sowie Additive incl. der erfindungsgemäßen Haftmittel des Typs a) bzw. b) gemischt:

Anschließend mischte man Schwefel und Beschleuniger bei ca. 60 bis 90°C nachträglich auf einer Walze hinzu.

Die Herstellung diverser Prüfkörper erfolgte in einer für den Fachmann übliche Weise in einer Pressvulkanisation bei 150°C.

Anschließend stanzte man in üblicher Weise Prüfkörper aus diesen Platten, um die in Tab. 2 genannten gummimechanischen Prüfungen durchzuführen.

Zusätzlich wurden Verbundprüfkörper aus den Kautschukmischungen und vermessingtem Stahlcord hergestellt und vulkanisiert. Dies erfolgte ebenfalls in einer für den Fachmann übliche Weise analog ASTM D 2229.

Eingesetzte Komponenten:
- **Vulkanox® HS**: Dihydrochinolin (polymerisiert), Produkt der Bayer AG
- **Vulkacit® DZ**: Sulfenamid, Produkt der Bayer AG
- **Koresin® Pulver**: Klebrigmacher-Harz, Produkt der BASF AG
- **Rhenocure IS 90-20**: unlöslicher Schwefel 80%ig, Produkt der Rhein Chemie Rheinau
- **TSR 5 Defo 700**: Naturkautschuk
- **Corax® N 326**: Ruß, Produkt der Degussa-Hüls AG
- **Stearinsäure**: Produkt der Henkel KGaA
- **Zinkoxyd aktiv®**: Produkt der Bayer AG
- **Stahlcord**: Produkt der Bekaert AG

Die einzelnen Mischungszusammensetzungen ist in der folgenden Tabelle 1 angegeben:

**Tabelle 1:**

| | Vergleichsmischung | Mischung A (Erfindung) | Mischung B (Erfindung) |
|---|---|---|---|
| TSR 5 Defo 700 | 100 | 100 | 100 |
| Corax N 326 | 60 | 60 | 60 |
| Stearinsäure | 2 | 2 | 2 |
| Koresin-Pulver | 4 | 4 | 4 |
| Vulkanox HS | 0,8 | 0,8 | 0,8 |
| Zinkoxyd aktiv | 8 | 8 | 8 |
| Haftmittel Typ a) (Erfindung) | | 0,63 | |
| Haftmittel Typ b) (Erfindung) | | | 0,63 |
| Vulkacit DZ | 1 | 1 | 1 |
| Rhenocure IS 90-20 | 5 | 5 | 5 |

Die gummimechanischen Eingenschaften der Kautschukmischungen und der daraus hergestellten Vulkanisate und verstärkten Gummiprüfkörpern sind in den folgenden Tabellen 2a - 2c aufgeführt:

**Tabelle 2a**

| Mischungseigenschaften | | | |
|---|---|---|---|
| | Vergleichsmischung | Mischung A(Erfindung) | Mischung B (Erfindung) |
| Mooney Viskosität [ME] | 56 | 76 | 54 |
| Mooney Scorch [min] | 12,5 | 14,6 | 12,3 |
| ts 01 [min] | 1,44 | 1,29 | 1,52 |
| t 90 [min] | 17,31 | 16,75 | 17,96 |

**Tabelle 2b**

| **Vulkanisateigenschaften** | | | |
|---|---|---|---|
| | Vergleichsmischung | Mischung A(Erfindung) | Mischung B (Erfindung) |
| Modul 100 [MPa] | 3,7 | 4,2 | 3,8 |
| Modul 300 [MPa] | 16,2 | 18,2 | 16,0 |
| Festigkeit [MPa] | 27,2 | 25,5 | 27,1 |
| Bruchdehnung [%] | 457 | 408 | 459 |
| Weiterreißfestigkeit 23°C | 50,3 | 47,0 | 52,8 |
| Weiterreißfestigkeit 70°C | 34,7 | - | 35,2 |
| Härte Shore A, 23°C | 72 | 75 | 74 |
| Härte Shore A, 70°C | 70 | 70 | 70 |
| Elastizität 23°C [%] | 41,6 | 42,7 | 41,0 |
| Elastizität 70°C [%] | 54,0 | 57,1 | 50,2 |

**Tabelle 2b**

| Haftungseigenschaften | | | |
|---|---|---|---|
| | Vergleichsmischung | Mischung A (Erfindung) | Mischung B (Erfindung) |
| Trennkraft [N] | 670 | 746 | 722 |
| Cordbedeckung* | 4 | - | 3 |

| | | | |
|---|---|---|---|
| * 1 = blank; 2 = teilweise bedeckt; 3 = vollkommen bedeckt; 4 = Strukturbruch des Gummis | | | |

Als Kriterien für Kautschukmischungen, die geeignet sind zur Herstellung von Verbundmaterialien mit den genannten Festigkeitsträgern durch Vulkanisation, gelten allgemein eine hohe Auszugskraft bei hohem Bedeckungsgrad unter der Voraussetzung, dass die übrigen Eigenschaften von Kautschukmischung und Vulkanisat vergleichbar sind. Die Beispiele zeigen, dass die erfindungsgemäßen Haftmittel bzw. die damit hergestellten Haftmischungen zu diesem Zweck hervorragend geeignet sind.

## Patentansprüche

1. Haftmittel zur Erhöhung der Haftfestigkeit zwischen Kautschuken und Festigkeitsträgern, **dadurch gekennzeichnet, dass** sie aus Verbindungen bestehen, die a) durch Umsetzung von Carbonsäuren mit Verbindungen, die eine oder mehrere Hydroxylgruppen oder eine oder mehrere Aminogruppen oder eine oder mehrere Hydroxyl- und eine oder mehrere Aminogruppen und zusätzlich eine oder mehrere Kohlenstoff-Kohlenstoff-Doppel- oder Dreifachbindungen im Molekül aufweisen sowie gegebenenfalls mit Verbindungen, die eine oder mehrere Hydroxylgruppen oder eine oder mehrere primäre oder sekundäre Aminogruppen oder eine oder mehrere Hydroxyl- und eine oder mehrere primäre oder sekundäre Aminogruppen und zusätzlich mindestens eine tertiäre Aminogruppe im Molekül enthalten, oder b) durch Umsetzung von Polyisocyanaten mit Verbindungen, die eine oder mehrere Hydroxylgruppen oder eine oder mehrere Aminogruppen oder eine oder mehrere Hydroxyl- und eine oder mehrere Aminogruppen und zusätzlich eine oder mehrere Kohlenstoff-Kohlenstoff-Doppel- oder Dreifachbindungen im Molekül aufweisen sowie gegebenenfalls mit Verbindungen, die eine oder mehrere Hydroxylgruppen oder eine oder mehrere primäre oder sekundäre Aminogruppen oder eine oder mehrere Hydroxyl- und eine oder mehrere primäre oder sekundäre Aminogruppen und zusätzlich mindestens eine tertiäre Aminogruppe im Molekül enthalten, erhältlich sind.

2. Haftmittel nach Anspruch 1, **dadurch gekennzeichnet, dass** die Carbonsäuren mit den Hydroxyl- und/oder Aminogruppen enthaltenden ungesättigten Verbindungen dergestalt umgesetzt werden, dass auf 1 mol Carboxylgruppen 0,1 bis 1,0 mol der Hydroxyl- und/oder Aminogruppen enthaltenden Verbindungen sowie 0,1 bis 0,9 mol der tert.-Aminogruppen enthaltenden Verbindungen eingesetzt werden und dass die Polyisocyanate mit den Hydroxyl- und/oder Aminogruppen enthaltenden ungesättigten Verbindungen sowie mit den tert.-Aminogruppen enthaltenden Verbindungen dergestalt umgesetzt werden, dass auf 1 mol Isocyanatgruppen 0,1 bis 1,0 mol der Hydroxyl- und/oder Aminogruppen enthaltenden ungesättigten Verbindungen sowie 0,3 bis 0,7 der tert.-Aminogruppen enthaltenden Verbindungen entfallen.

3. Verwendung der Haftmittel nach Anspruch 1 zur Herstellung von Festigkeitsträgern enthaltenden Kautschukmischungen oder Kautschukvulkanisaten.
